# EUROPEAN PATENT APPLICATION

(11) **EP 1 634 516 A1**
(43) Date of publication of application: **15.03.2006**
(21) Application number: 04745438.4
(22) Date of filing: 31.05.2004
(51) Int. Cl.: A47C 7/02

(54) **SEAT WITH SEATING SENSOR AND PAD FOR SEAT**

(30) Priority: 03.06.2003 JP 2003158228; 18.09.2003 JP 2003326413; 13.02.2004 JP 2004036495
(71) Applicant: Bridgestone Corporation, Tokyo 104-8340 (JP)
(72) Inventor: ZENBA, Masaaki c/o Yokohama Plant, Yokohama-shi Kanagawa 2440812 (JP); YAMASAKI, Kouichirou c/o Yokohama Plant, Yokohama-shi Kanagawa 2440812 (JP); KUMAGAI, Kenji c/o Yokohama Plant, Yokohama-shi Kanagawa 2440812 (JP)
(74) Representative: Whalley, Kevin
(86) International application number: PCT/JP2004/007473
(87) International publication number: WO 2004/107919

(57) **Abstract**

A seat with a seating sensor is provided, in which no foreign body sensation is felt at all even when a sensor for detecting seating is provided, and the seat with the seating sensor is easily manufactured. A supporting member 2 is integrally provided with a bottom face of the pad 1. A sheet-like seating sensor 4 and a plate 5 serving as a rigid plate-like member 5 for covering the seating sensor 4 are disposed between the bottom face of the pad 1 and the supporting member 2. The seat with the seating sensor is molded by means of disposing the supporting member 2, the seating sensor 4, and the plate 5 in a stacked state, shown in the drawings, in a metallic mold for molding the pad 1, feeding raw liquid of urethane into the metallic mold, and foaming.

## Description

### Field of the Invention

The present invention relates to a seat with a sheet-like seating sensor for detecting seating of a human body, and more particularly relates to a seat with a seating sensor preferably applied to a seat of a motor vehicle. Further, the present invention relates to a pad for use in the seat with the seating sensor.

### Background of the Invention

A seating sensor is sometimes provided at an upper face of a seat for detecting whether an occupant is seated in the seat. In such a seat with a seating sensor provided with a seating sensor at an upper face, a slab of about 5 mm in thickness is adhered in a manner so as to cover the seating sensor, or a frame laminating process of about 5 mm in thickness is performed as a countermeasure against a foreign body sensation, caused by the presence of a seating sensor when the occupant is seated in the seat.

In Japanese Unexamined Patent Application Publication No. 11-34710, a seat with a seating sensor in which a sheet-like seating sensor is disposed inside part of a pad is described, and as one mode, a configuration in which a slit is formed from a side face of the pad toward a center portion threreof and a seating sensor is disposed in the slit, is described. Further, as another mode, a configuration is described, in which a hole is formed from a bottom face of a urethane pad toward an upper part thereof, and a urethane foam insertion member having approximately the same size as that of the hole is inserted into the hole and a seating sensor is disposed at an upper face of the urethane foam insertion member.

There has been disadvantages such as that, too many man-hours for adhering are required, or a cost of laminating is increased in the above-described conventional technology in which a seating sensor is adhered at an upper face of the pad, a slab is adhered in a manner so as to cover the seating sensor, or the frame laminating process is performed.

When the slit or the hole is formed in the urethane foam pad, and the seating sensor is disposed in the slit or the hole as described in the Japanese Unexamined Patent Application Publication No. 11-34710, it is required to form the slit or the hole, or to manufacture the insertion member to insert into the hole. In addition, it is also required to insert and fix the seating sensor into the slit, or to fix the insertion member to a main body side of the pad after inserting the insertion member into the hole, both of which result in the increase of the manufacturing man-hours.

### Summary of the Invention

An object of the present invention is to provide a seat with a seating sensor capable of solving various kinds of problems in the conventional technology and that is easy to manufacture, and capable of eliminating a foreign body sensation of the sensor at a time of seating, and a pad for the seat.

Further, another object of the present invention is to provide a seat with a seating sensor capable of sensitively detecting seating, and a pad therefor.

In a first aspect, a seat with a seating sensor is characterized in including a soft pad formed of foamed resin, and a sheet-like pressure-sensitive sensor for detecting a human body seated on the pad, in which the pad is integrally molded with the seating sensor by means of a foaming molding process.

In a second aspect, a pad for a seat is characterized in including a soft pad formed of resin foam, and a sheet-like pressure-sensitive sensor for detecting a human body seated on the pad, in which the pad is integrally molded with the seating sensor by means of a foaming molding process.

In the seat with the seating sensor and the pad, because the pad is integrally molded with the seating sensor by means of foaming molding process, the seat and the pad are easily manufactured and a manufacturing cost is low.

In the seat with the seating sensor and the pad, a foreign body sensation of the seating sensor at a time of seating is eliminated by means of disposing the seating sensor at a bottom face of the pad.

In a third aspect, a seat with a seating sensor is characterized in including a soft pad formed of resin foam and a sheet-like pressure-sensitive sensor for detecting a human body seated on the pad, in which a rigid plate-like member is disposed at an upper side or a lower side of the seating sensor.

In a fourth aspect, a pad for a seat is characterized in including a soft pad formed of resin foam, and a sheet-like pressure-sensitive sensor for detecting a human body seated on the pad, in which a rigid plate-like member is disposed at an upper side or a lower side of the seating sensor.

Thus, the rigid plate-shaped member is disposed at a position of at least one of an upper side or a lower side of the seating sensor and thereby, even when the seating sensor is disposed at a bottom face of the pad, a seating load is applied to the seating sensor in a suitable manner and seating is detected in an ensured manner. A projection may be formed on the rigid plate-like member so as to apply a load to the seating sensor in a concentrated manner.

In this case, it is preferable that the rigid plate-like member disposed at the lower side of the seating sensor serves as a supporting member disposed at the bottom face of the seat with the seating sensor, and in particular, the supporting member is preferably formed with the pad in an integral manner.

A wiring cable insertion portion, such as an opening, a notch, or the like is provided in the supporting member, and the wiring cable of the seating sensor is led through the wiring cable insertion portion and led outward of the seat with the seating sensor and thereby the seating sensor is easily connected to a control system.

Thus, the pad integrally formed with the seating sensor can be manufactured by disposing the supporting member, the seating sensor, and the rigid plate-like member in an overlapping state along an inside face of the metallic mold for a molding process, and by causing to foam a foaming resin material, such as urethane or the like in the metallic mold, keeping the aforementioned state. In this case, the wiring cable of the seating sensor is led through the wiring cable insertion portion and thereby the wiring cable is led outward from the wiring cable insertion portion of the supporting member at a bottom face of the pad and the seat with the seating sensor.

In a fifth aspect, the seat with a seating sensor is characterized in including a soft pad formed of resin foam, and a sheet-like pressure-sensitive sensor for detecting a human body seated on the pad, in which the seating sensor is formed into a separate body from the pad and is disposed at a lower side of the pad.

Thus, in the seat with the seating sensor in which the seating sensor is formed into the separate body from the pad, the seating sensor can be solely replaced when a fault or a malfunction occurs with the seating sensor. Further, the seat with the seating sensor is manufactured with ease and at low cost.

In the seat with the seating sensor in which the seating sensor is formed into the separate body from the pad, the rigid plate-like member may be also disposed at a position of at least one of an upper side and a lower side of the seating sensor, however, the rigid plate-like member may be omitted.

In addition, by attaching the seating sensor onto a seat frame, accuracy of disposing the seat sensor is improved and the seat with the seating sensor is easily assembled.

The seat with the seating sensor and the pad in the present invention are easily manufactured and are also possible to configure such that the foreign body sensation is not felt at all even when seated at an upper face of the pad.

### Brief Description of the Drawings

FIG. 1a is an anteroposterior cross-section illustrating a seat with a seating sensor according to the embodiment, and FIG. 1b is a cross-section, taken along a B-B line in FIG. 1a;
FIG. 2 is a perspective view illustrating a plate 5A serving as a rigid plate-like member, looking from below;
FIG. 3 is a graph showing a measured result of detection characteristics;
FIG. 4 is a graph showing a measured result of detection characteristics;
FIG. 5 is a graph showing a measured result of detection characteristics; and
FIG. 6 is a cross-section illustrating the seat with the seating sensor according to another embodiment.

### Detailed Description of the Preferred Embodiments

Hereinbelow, an embodiment of the present invention is explained referring to the drawings.

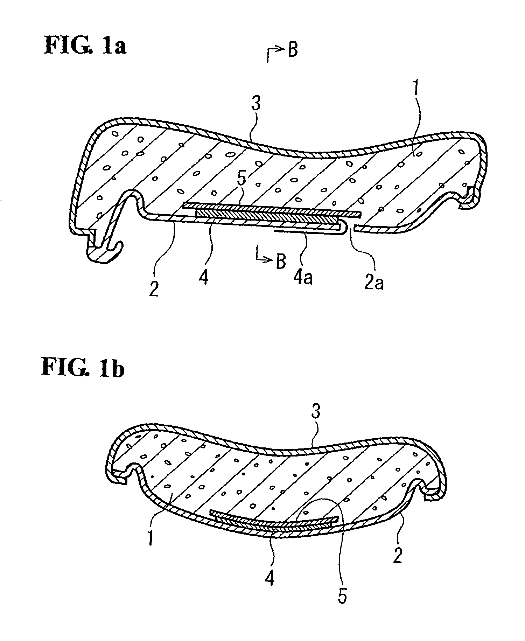

FIG. 1a is an anteroposterior cross-section illustrating a seat with a seating sensor according to the present invention, and FIG. 1b is a cross-section, taken along the B-B cutting line in FIG. 1a.

In this embodiment, a supporting member 2 is integrally provided at a bottom face of a pad 1. The supporting member 2 is formed of non-woven cloth, coarse wool felt, or the like. The pad 1 is formed of urethane foam in this embodiment. The upper face and four side faces of the pad 1 are covered with a cover (cover trim) 3 formed of cloth, leather, or the like.

A sheet-like seating sensor 4 and a plate 5 serving as a rigid plate-like member that covers the seating sensor 4 are disposed between a bottom face of the pad 1 and the supporting member 2. The seating sensor 4 is formed of a pressure-sensitive sensor for generating a turning-ON signal, when the pressure-sensitive sensor receives pressure greater than a predetermined value, or a deformation. The plate 5 is formed of pressed felt that is a kind of felt whose rigidity is increased by being pressed, a synthetic resin plate formed of an acrylic material, polypropylene or the like, a metal plate formed of iron or the like, or rigid cloth provided with rigidity caused by means of impregnating synthetic resin or the like.

In this embodiment, the plate 5 has an area larger than that of the sheet-like seating sensor 4, and is disposed in a manner so as to outwardly protrude from a peripheral edge of the seating sensor 4. However, the plate 5 may be formed into approximately the same size as the seating sensor 4.

An opening 2a is formed to serve as a wiring cable insertion portion in the supporting member 2. A harness 4a for transmitting a signal from the seating sensor 4 to a controller is led to a lower side of the supporting member 2 through the opening 2a. At a tip end of the harness 4a, a connector (not shown) is connected.

The seat with the seating sensor can be molded by means of disposing the supporting member 2, the seating sensor 4, and the plate 5 in a metallic mold for molding the pad 1 in advance keeping a stacked state shown in the drawing, and feeding and foaming a raw liquid of urethane into the metallic mold. The seat with the seating sensor is completed by attaching a cover 3 onto the integrally molded body of the pad 1, the supporting member 2, the seating sensor 4, and the plate 5, which have been taken out from the metallic mold. Further, the harness 4a is inserted through the opening 2a before setting the supporting member 2, the seating sensor 4, and the plate 5 in the metallic mold.

It is preferable for the seating sensor 4 and the plate 5 to be integrally fixed to the supporting member 2 by means of a clamp, such as an adhesive agent, a clip, or the like, and to be set in the metallic mold in this state. In addition, the seating sensor 4 may be fixed to the supporting member 2 and the plate 5 by means of sandwiching the seating sensor 4 between the supporting member 2 and the plate 5, and fixing the plate 5 to the supporting member 2 in this state.

The foamed urethane foam is sufficiently fixed to the supporting member 2 and the plate 5, and the supporting member 2, the seating sensor 4, and the plate 5 are brought to be firmly combined with the pad 1. The opening 2a is also brought to be filled with the urethane foam. In addition, the opening 2a may be closed by means of adhering adhesive tape or the like to a lower face of the supporting member 2, if necessary.

Thus, the seat with the seating sensor is integrally formed from the supporting member 2, the seating sensor 4, and the plate 5 by means of foaming molding process of the pad 1. Further, the seat with the seating sensor is capable of being easily manufactured by means of an ordinary manufacturing process without substantially affecting toward characteristics of molding of the product or the like, in the mold. Since the seating sensor 4 is disposed at a bottom face portion of the pad 1, no foreign body sensation is felt at all even when seated in the seat with the seating sensor.

In this embodiment, because the plate 5 that serves as the rigid plate-like member is disposed at an upper side of the seating sensor 4, a seating load is securely applied to the seating sensor 4 and the seating is detected in an ensured manner. Further, because the harness 4a of the seating sensor 4 is led outward through the opening 2a, a length of the wiring cable for connecting the seating sensor 4 to the control circuit, when the seat with the seating sensor is assembled with the motor vehicle, can be made shorter than that of a case when the seating sensor 4 is disposed at a surface, and this results in a low price and easy manufacturing work.

The above-described embodiment is an example of the present invention, and the present invention is applicable of a state other than that shown in the drawings. For example, a notch-like portion can be provided in the supporting member 2, instead of the opening 2a.

Further, in the embodiment shown in FIGs. 1a and 1b, the opening 2a is provided in the vicinity of the center of the supporting member 2, however, the same may be provided at a position other than that.

In the present invention, the rigid plate-like member may be provided only at a position, either above or below the seating sensor 4. In addition, when the rigid plate-like member is provided below the seating sensor 4, the same may be separately provided from the supporting member 2.

In the present invention, a projection may be formed on the rigid plate-like member and the load may be applied to the seating sensor 4 in a concentrating manner by means of partially pressing the seating sensor 4 by the projection.

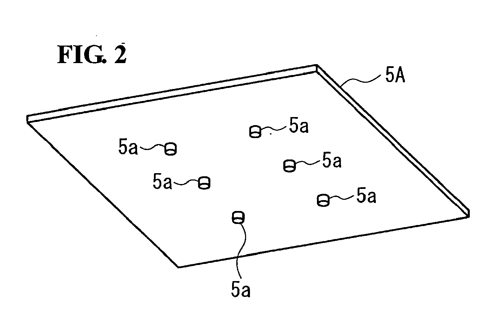

For example, a plate 5A provided with a plurality of (six in number in FIG. 2) cylindrically shaped projections 5a at a lower face, shown in FIG. 2, may be used instead of the flat shaped plate 5, shown in FIGs. 1a and 1b.

The projection may be provided not on the plate but on a portion in the supporting member 2, in FIGs. 1a and 1b, where the sensor 4 is overlapped thereon, and further, the projection may be provided at an upper face or a lower face of the sensor 4, in FIGs. 1a and 1b.

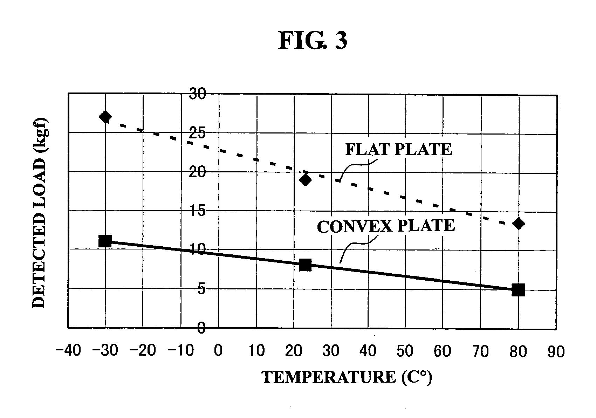

FIG. 3 is a graph showing a relationship between temperature and a minimum load to be detected by the sensor (detected load), when either one of the plate 5A having a projection at a lower face, or the flat shaped plate 5 without having the projection, is overlapped with an upper face of the sensor, and the pad is disposed thereon and a load is applied thereto from above the pad. Here, the projection of the plate 5A having the projection has a cylindrical shape of about 5.0 mm in diameter and about 1.0 mm in height.

As is clear from FIG. 3, the sensor more sensitively detects the load even when an extremely small load is applied when the plate having the projection is used, across an entire temperature measurement range (from -30 degrees to 80 degrees Celcius). Thus, sensitivity of the sensor can be improved without using a sensor having high sensitivity, by means of using the plate having the projection.

As illustrated in FIG. 3, even when any one of the flat shaped plate or the plate having the projection is used, the lower the temperature becomes, the larger the detected load becomes. However, the variation of the detected load is smaller when the plate having the projection is used than when the same is not used. Accordingly, a stable detected load can be obtained across a wider temperature area when the sensor is provided with the plate having the projection than when the sensor is provided with the plate without having the projection, and a sufficiently small detected load can be obtained even at a low temperature area.

It is generally understood that the reason why the detected load increases as the temperature gets lower is that the hardening of the pad in such a low temperature makes it harder to fully transmit the load applied on the upper face of the pad up to the lower face of the pad. It is further reasoned that the sensor provided with a plate having the projection offers relatively small variations of the detected load attributable to temperature even when the pad is hardened to some degrees because a projection provided on the plate having the projection achieves a local loading to the sensor.

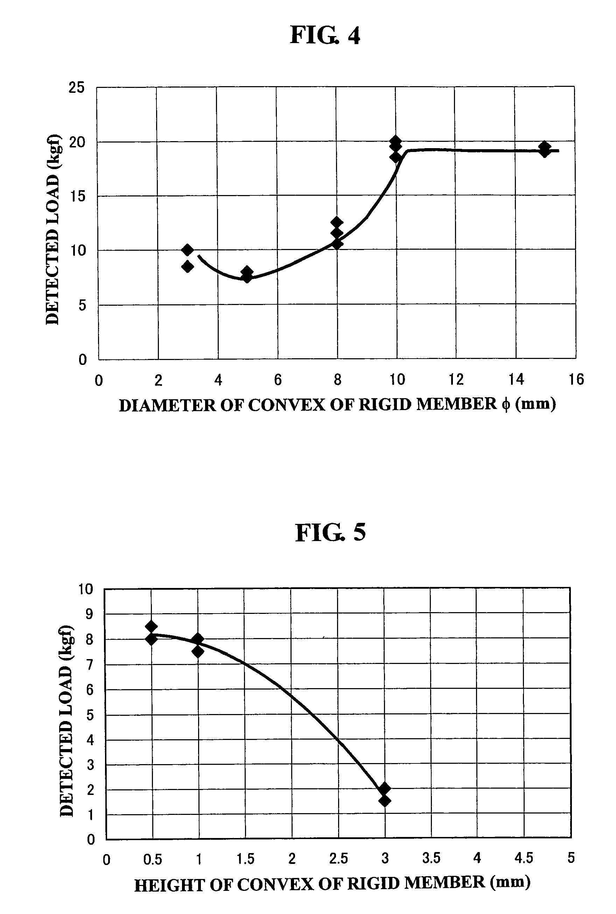

FIG. 4 is a graph showing a variation of the detected load in a case when the diameter of the projection is varied when a height of the projection is determined to be a constant value of 1.0 mm. In addition, the detected load is measured by overlapping the face of the plate having the projection, on which the projection is provided, with the upper face of the sensor, and by applying the load from above the pad that is disposed thereupon, in a similar manner as performed in the case in FIG. 3.

As is clear from FIG. 4, the detected load is caused to be small when the diameter of the projection is brought to be equal to or less than 10 mm, and the sensitivity is thereby improved. The diameter of the projection is preferable to be from 3 to 8 mm.

FIG. 5 is a graph showing a variation of the detected load in a case when the diameter of the projection is set to be a constant value of 5 mm and the height of the projection is varied. In the same manner as that in FIG. 4, the detected load is measured.

As is clear from FIG. 5, the higher the height of the projection is, the smaller the detected load becomes. When the projection is excessively high, the sensitivity becomes excessively high and therefore, the height of the projection is preferable to be from about 1.0 to about 2.5 mm.

In the embodiment described above, the pad, the sensor, and the rigid plate-like member are integrally molded by means of the foaming molding process, however, only the pad may be molded first, and the sensor and the rigid plate-like member may be attached thereafter. As another option, either the sensor or the rigid plate-like member, and the pad may be integrally molded first, and the other one of the sensor or the rigid plate-like member may be attached to that thereafter.

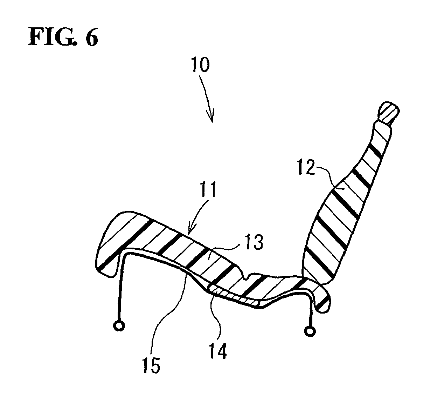

FIG. 6 is a cross-section illustrating the seat with the seating sensor according to the embodiment in which the pad and the seating sensor are separately formed.

The seat with the seating sensor 10 is provided with a seat cushion 11 and a seat back 12, and the seat cushion 11 is provided with a pad 13 formed of foam such as urethane foam or the like. The pad 13 is provided on a seat frame 15 and a sheet-like seating sensor 14 is disposed between the seat frame 15 and the pad. A portion in the seat frame 15 where the seating sensor 14 touches may be a seat pan formed of metal or the like, or a spring may be also applicable.

The seat with the seating sensor 10 is configured such that the pad 13 and the seating sensor 14 are separately formed and therefore manufacturing work is extremely easy and in addition, when a fault or a malfunction occurs with the seating sensor 14, only the seating sensor 14 can be replaced.

The rigid plate-like member, similar to that in the above-described embodiment may be disposed on at least one of the upper side and the lower side of the seating sensor 14. The rigid plate-like member is not always necessary to be provided. The seating sensor 14 may be attached to the seat frame 15 by means of an adhesive agent. When the seating sensor 14 is thus configured, a positional accuracy of the seating sensor 14 is improved and an assembling work for the seat with the seating sensor 10 is made to be easy.

## Claims

1. A seat with a seating sensor, comprising a soft pad formed of resin foam, and a sheet-like pressure-sensitive sensor for detecting a human body seated on the pad, wherein the pad is integrally molded with the seating sensor by means of a foaming molding process.

2. The seat with the seating sensor according to Claim 1, wherein the seating sensor is disposed at a bottom face portion of the pad.

3. The seat with the seating sensor according to Claim 1, wherein a rigid plate-like member is disposed at an upper side or a lower side of the seating sensor.

4. The seat with the seating sensor according to Claim 1, wherein the seating sensor is sandwiched between rigid plate-like members from above and below.

5. The seat with the seating sensor according to Claim 3, wherein a projection for applying a load to the seating sensor in a concentrated manner is disposed on a rigid plate-like member.

6. The seat with the seating sensor according to Claim 3, wherein the rigid plate-like member disposed at the lower side of the seating sensor serves as a supporting member disposed at a bottom face of the seat with the seating sensor.

7. The seat with the seating sensor according to Claim 6, wherein the pad is integrally molded with the supporting member.

8. The seat with the seating sensor according to Claim 6, wherein a wiring cable insertion portion is provided in the supporting member, and the wiring cable of the seating sensor is led through the wiring cable insertion portion and led outward of the seat with the seating sensor.

9. The seat with the seating sensor according to Claim 8, wherein the wiring cable insertion portion is an opening or a notch portion.

10. The seat with the seating sensor according to Claim 8, wherein in the seat with the seating sensor, the supporting member is disposed along an inner face of a metallic mold for a molding process, the seating sensor is disposed along an inside of the supporting member, and the rigid plate-shaped member is overlapped with the seating sensor, and
wherein the wiring cable of the seating sensor is led through the wiring cable insertion portion of the supporting member, and
wherein, keeping the state above, the pad is caused to foam and be integrally molded with the supporting member, the seating sensor, and the rigid plate-like member by means of causing resin to foam in the metallic mold for the molding process.

11. The seat with the seating sensor according to Claim 1, wherein the pad is formed of urethane foam.

12. A seat with a seating sensor, comprising a soft pad formed of resin foam, and a sheet-like pressure-sensitive sensor for detecting a human body seated on the pad, wherein a rigid plate-like member is disposed at an upper side or a lower side of the seating sensor.

13. The seat with the seating sensor according to Claim 12, wherein the seating sensor is sandwiched between rigid plate-like members from above and below.

14. The seat with the seating sensor according to Claim 12, wherein a projection for applying a load to the seating sensor in a concentrated manner is disposed on a rigid plate-like member.

15. The seat with the seating sensor according to Claim 12, wherein the pad is formed of urethane foam.

16. A pad for a seat, comprising a soft pad formed of resin foam, and a sheet-like pressure-sensitive sensor for detecting a human body seated on the pad, wherein the pad is integrally molded with the seating sensor by means of a foaming molding process.

17. A pad for a seat, comprising a soft pad formed of resin foam, and a sheet-like pressure-sensitive sensor for detecting a human body seated on the pad, wherein a rigid plate-like member is disposed at an upper side or a lower side of the seating sensor.

18. The pad for the seat according to Claim 17, wherein the seating sensor is sandwiched between the rigid plate-like members from above and below.

19. The pad for the seat according to Claim 17, wherein a projection for applying a load to the seating sensor in a concentrated manner is disposed on the rigid plate-like member.

20. A seat with a seating sensor, comprising a soft pad formed of resin foam, and a sheet-like pressure-sensitive sensor for detecting a human body seated on the pad, wherein the seating sensor is formed into a separate body from the pad and is disposed at a lower side of the pad.

21. The seat with the seating sensor according to Claim 20, wherein the seating sensor is disposed between the pad and a seat frame.

22. The seat with the seating sensor according to Claim 20, wherein a rigid plate-like member is disposed at a position of at least one of upper side and a lower side of the seating sensor.

23. The seat with the seating sensor according to Claim 20, wherein the seating sensor is attached to the seat frame.
